(19) Europäisches Patentamt
European Patent Office
Office européen des brevets

(11) **EP 3 900 232 B1**

(12) **FASCICULE DE BREVET EUROPEEN**

(45) Date de publication et mention de la délivrance du brevet:
**09.08.2023  Bulletin 2023/32**

(21) Numéro de dépôt: **19829553.7**

(22) Date de dépôt: **19.12.2019**

(51) Classification Internationale des Brevets (IPC):
**H04B 17/20** (2015.01)    **G01S 3/46** (2006.01)

(52) Classification Coopérative des Brevets (CPC):
**G01S 3/46; H04B 17/20**

(86) Numéro de dépôt international:
**PCT/EP2019/086317**

(87) Numéro de publication internationale:
**WO 2020/127739 (25.06.2020 Gazette 2020/26)**

(54) **PROCÉDÉ ET DISPOSITIF D'ANALYSE D'UN SIGNAL INCIDENT**

VERFAHREN UND VORRICHTUNG ZUR ANALYSE EINES EINFALLENDEN SIGNALS

METHOD AND DEVICE FOR ANALYZING AN INCIDENT SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.12.2018  FR 1873506**

(43) Date de publication de la demande:
**27.10.2021  Bulletin 2021/43**

(73) Titulaire: **THALES**
**92400 Courbevoie (FR)**

(72) Inventeurs:
• **ENDERLI, Cyrille**
**78990 ELANCOURT (FR)**
• **DEFOUR, Martin**
**78990 ELANCOURT (FR)**
• **SEUTE, Hugo**
**78990 ELANCOURT (FR)**

(74) Mandataire: **Lavoix**
**2, place d'Estienne d'Orves**
**75441 Paris Cedex 09 (FR)**

(56) Documents cités:
• **XU LE ET AL: "Joint Two-Dimensional DOA and Frequency Estimation for L-Shaped Array via Compressed Sensing PARAFAC Method", IEEE ACCESS, vol. 6, 25 juin 2018 (2018-06-25), pages 37204-37213, XP011687442, DOI: 10.1109/ACCESS.2018.2850307**
• **ZHAN ZHANG ET AL: "Joint Estimation of DOA and Frequency with Sub-Nyquist Sampling in a Binary Array Radar System", ARXIV.ORG, CORNELL UNIVERSITY LIBRARY, 201 OLIN LIBRARY CORNELL UNIVERSITY ITHACA, NY 14853, 26 octobre 2018 (2018-10-26), XP080928310,**

**Description**

La présente invention concerne un procédé d'analyse des propriétés d'un signal incident. La présente invention se rapporte aussi à un dispositif d'analyse et à une plate-forme associés.

Dans le domaine de l'écoute passive très large bande des signaux radioélectriques, typiquement entre 2 GigaHertz (GHz) et 20 GHz, on cherche à obtenir la mesure simultanée de la fréquence et de la direction d'arrivée d'un signal avec un récepteur à échantillonnage temporel direct ne respectant pas le critère de Shannon, tout en minimisant la charge de calculs. Il est également souhaitable que la mesure soit robuste en cas d'erreurs entre les fréquences d'échantillonnage spécifiées et les fréquences d'échantillonnage réellement implantées.

Il est, en particulier, connu du document L.-J. Ge et al., "Simultaneous Frequency and Direction Estimation from Parallel Array Data", IEE Proc. Radar, Sonar Navig., 142(1), pp.6-10, 1995 un procédé permettant l'estimation simultanée de la fréquence et de la direction de l'arrivée de multiples sources à bande étroite. Basées sur des techniques d'invariance par rotation, les estimations conjointes sont calculées directement par un traitement de données approprié.

Toutefois, La charge de calcul reste relativement importante surtout avec un grand nombre d'éléments rayonnant, et les performances sont limitées à des fréquences assez basses, rendant l'approche mal adaptée au contexte de l'écoute large bande.

Il est également connu d'un article de Xu LE et al. un article intitulé « Joint Two-Dimensional DOA and Frequency Estimation for L-Shaped Array via Compressed Sensing PARAFAC Method » IEEE ACCESS, vol. 6, 25 juin 2018, pages 37204-37213.

Il existe donc un besoin pour un procédé d'analyse permettant d'obtenir simultanément la fréquence et de la direction d'arrivée d'un signal large bande avec un récepteur à échantillonnage temporel direct ne respectant pas le critère de Shannon impliquant moins de calculs et présentant une bonne robustesse.

Pour cela, la présente description porte sur un procédé d'analyse des propriétés d'un signal incident selon la revendication 1.

Suivant des modes de réalisation particuliers, le procédé comprend une ou plusieurs des caractéristiques suivantes, prise(s) isolément ou suivant toutes les combinaisons techniquement possibles :

- l'incrément est identique à chaque itération.
- l'étape d'extraction comporte un redressement suivi d'un filtrage passe-bas pour obtenir la valeur absolue de l'enveloppe pour l'incrément.
- l'enveloppe présente une succession de maxima locaux et, lors de l'étape d'estimation, il est déterminé la position du premier maximum local de l'enveloppe, la position du premier maximum local étant utilisée pour estimer la direction d'arrivée du signal incident.
- l'enveloppe présente une période, la période étant l'intervalle entre deux maxima absolus successifs et dans lequel, lors de l'étape d'estimation, il est déterminé la période de l'enveloppe, la période étant utilisée pour estimer la fréquence du signal incident.

La présente description décrit également un dispositif d'analyse des propriétés d'un signal incident, selon la revendication 6.

Suivant des modes de réalisation particuliers, le dispositif d'analyse comprend une ou plusieurs des caractéristiques suivantes, prise(s) isolément ou suivant toutes les combinaisons techniquement possibles :

- le dispositif est un dispositif numérique.
- le dispositif est un dispositif analogique.

La présente description décrit également une plate-forme comportant un dispositif d'analyse d'un signal tel que précédemment décrit.

D'autres caractéristiques et avantages de l'invention apparaîtront à la lecture de la description qui suit, de modes de réalisation de l'invention, donnée à titre d'exemple uniquement et en référence aux dessins qui sont :

- figure 1, une représentation schématique d'une plate-forme comprenant un dispositif d'analyse d'un signal ;
- figure 2, une vue schématique d'un exemple de dispositif d'analyse de la figure 1 ;
- figure 3, une représentation schématique d'une enveloppe de signal obtenu par le dispositif d'analyse, et
- figure 4, une vue schématique d'un exemple de dispositif d'analyse de la figure 1. Une plate-forme 10 est représentée schématiquement sur la figure 1.

La plate-forme 10 est, par exemple, un véhicule.

Selon l'exemple proposé, la plate-forme est un aéronef.

La plate-forme 10 comporte des systèmes 14 fonctionnant en temps réel assurant le fonctionnement de la plate-forme 10.

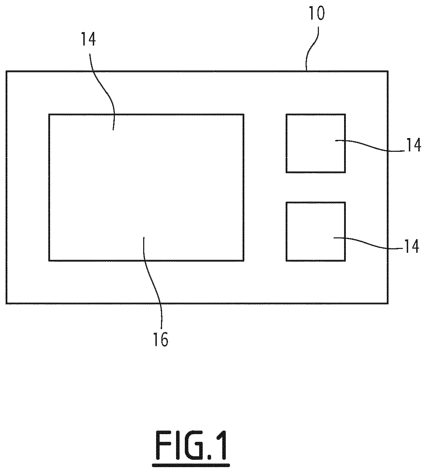

Trois systèmes en temps réel 14 sont représentés sur la figure 1.

Pour la suite, il est supposé qu'un des systèmes en temps réel est un dispositif d'analyse de signal 16.

Le dispositif d'analyse 16 est propre à analyser les propriétés d'un signal incident.

Plus précisément, le dispositif d'analyse 16 est propre à mesurer simultanément la fréquence d'un signal incident dans une plage de fréquences prédéterminée et la direction d'arrivée du même signal incident.

Le dispositif d'analyse 16 est adapté pour un signal présentant une bande spectrale supérieure ou égale à 10 GigaHertz (GHz).

Un signal présentant une bande spectrale supérieure ou égale à 10 GHz est considéré comme un signal large bande.

Le dispositif d'analyse 16 comporte un réseau antennaire 18, des voies de traitement 20, un circuit de calcul 22 et un calculateur 24.

Le réseau antennaire 18 est un réseau linéaire.

Le réseau antennaire 18 comporte N antennes 26.

N est un nombre entier, notamment un nombre entier supérieur ou égal à 10.

Chaque antenne 26 est repérée par un indice n.

L'indice n est un entier compris entre 0 et N-1.

Les antennes 26 sont régulièrement espacées d'un espacement noté a.

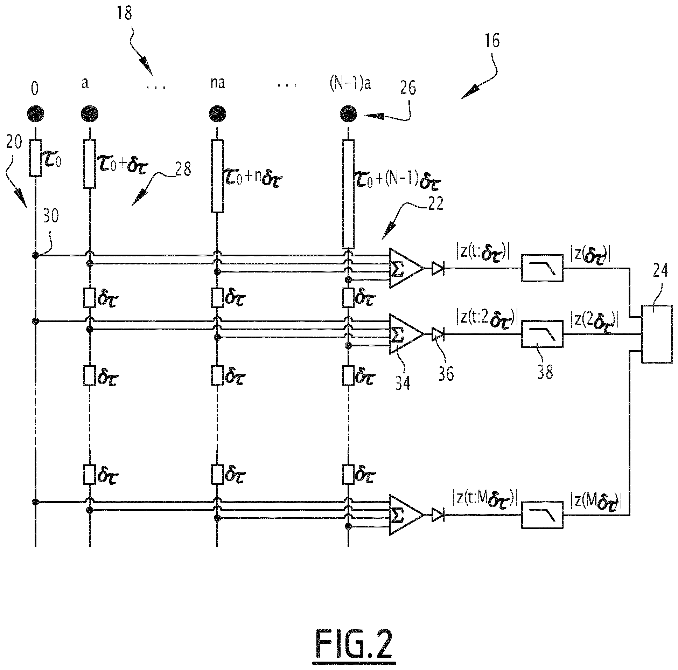

Sur la figure 2, de manière schématique, *na* désigne la position de la (n+1)-ème antenne 26 avec par convention une origine des distances située sur l'antenne 16 la plus à gauche du réseau antennaire 18.

Chaque antenne 26 est reliée à une voie de traitement 20 spécifique.

Chaque voie de traitement 20 est repérée par le même indice n que l'antenne 26 à laquelle la voie de traitement 20 est reliée.

Chaque voie de traitement 20 comporte M jeux de lignes à retard 28 successifs, chaque jeu de lignes à retard 28 étant relié par un point de prélèvement 30 de sorte que chaque voie de traitement 20 comporte M voies de prélèvement 30.

Le premier jeu de lignes à retard 28 situé derrière les voies de traitement 20 présente une augmentation affine avec l'indice de la voie de traitement 20 du retard introduit par incrément d'une quantité $\delta\tau$.

M est un nombre entier strictement supérieur à 1.

Le circuit de calcul 22 comporte M sommateurs 34 suivi chacun d'un redresseur 36 et un filtre passe-bas 38.

Le i-ième sommateur 34 est propre à effectuer la somme des signaux prélevés sur chaque i-ième point de prélèvement 30 d'une voie de traitement 20.

Le calculateur 24 est propre à obtenir les signaux en sortie de chaque filtre passe-bas 38 pour estimer la direction d'arrivée et la fréquence du signal incident.

Le fonctionnement du dispositif 16 est maintenant décrit en référence à un exemple de mise en oeuvre d'un procédé d'analyse des propriétés d'un signal incident.

Le procédé comporte une étape de réception, une étape de décalage, une étape de calcul et une étape d'estimation.

Il est supposé qu'une source émet un signal à fréquence supposée fixe pendant un temps d'analyse.

Lors de l'étape de réception, chaque antenne 26 reçoit un signal.

Le signal réel reçu sur la n-ième antenne, s'écrit, avec une amplitude S :

$$s_n(t) = S\cos[\omega t + kna\sin\theta + \phi_0]$$

Avec

- $\phi_0$ est une phase quelconque,
- $\theta$ désigne l'angle d'arrivée du signal,
- $\omega$ désigne la pulsation du signal liée à sa fréquence v *via* la relation $\omega = 2\pi v$, et
- $k$ désigne le nombre d'onde lié à la longueur d'onde $\lambda$ *via* la relation $k = \dfrac{2\pi}{\lambda}$.

Lors de l'étape de décalage, chaque signal est décalé d'une valeur de n fois le même incrément.

Autrement formulé, le décalage ou le retard augmente linéairement avec l'indice de la voie.

Il vient ainsi que l'échantillon de la n-ième voie s'exprime comme :

$$s_n(t - \tau_0 - n.\delta\tau) = S\cos[\omega(t - \tau_0 - n\delta\tau) + kna\sin\theta + \phi_0]$$

où $\tau_0$ désigne une valeur initiale de retard et $\delta\tau$ l'incrément.

Un tel décalage est donc un décalage temporel.

A l'issue de l'étape de décalage, il est obtenu des échantillons décalés sur chacune des N voies, le décalage étant spécifique de l'indice de la voie.

Lors de l'étape de calcul, il est effectué une sommation de chacun des échantillons décalés à l'aide du sommateur. Il est ainsi obtenu :

$$z(t; \delta\tau) = \sum_{n=0}^{N} s_n(t - \tau_0 - n\delta\tau)$$

En tenant compte de la relation $\omega = kc = \dfrac{2\pi}{\lambda}c$ et en posant l'amplitude S=1, il vient après calcul :

$$z(t; \delta\tau) = \frac{\sin\left[N\dfrac{\pi}{\lambda}(c\delta\tau - a\sin\theta)\right]}{\sin\left[\dfrac{\pi}{\lambda}(c\delta\tau - a\sin\theta)\right]} \cdot \cos\left[\omega t + \phi_1 - \omega\tau_0 - \frac{N-1}{2}\omega\delta\tau\right]$$

Où

$$\phi_1 = \phi_0 + \frac{(N-1)}{2}ka\sin\theta.$$

Il apparaît que le signal de sommation z(t ; $\delta\tau$) est le produit d'une valeur d'une enveloppe Z à la valeur de l'incrément $\delta\tau$ et d'une modulation M(t ; $\delta\tau$).

L'enveloppe Z est un noyau de Dirichlet dont l'expression à la valeur de l'incrément $\delta\tau$ est donnée par :

$$Z(\delta\tau) = \frac{\sin\left[N\dfrac{\pi}{\lambda}(c\delta\tau - a\sin\theta)\right]}{\sin\left[\dfrac{\pi}{\lambda}(c\delta\tau - a\sin\theta)\right]}$$

La modulation M(t ; $\delta\tau$) est une modulation de type sinusoïdale pouvant s'écrire comme :

$$M(t; \delta\tau) = \cos\left[\omega t + \phi_1 - \omega\tau_0 - \frac{N-1}{2}\omega\delta\tau\right]$$

A l'issue de l'étape de calcul, il est ainsi obtenu un signal de sommation.

Lors de l'étape d'extraction, il est extrait la valeur de l'enveloppe Z pour l'incrément $\delta\tau$.

Cela signifie que la modulation M(t; $\delta\tau$) est éliminée.

Dans l'implémentation analogique de la figure 2, l'extraction est effectuée par une opération de redressement suivie d'une opération de filtrage passe-bas.

Il est ainsi obtenu la valeur absolue de l'enveloppe Z pour l'incrément $\delta\tau$.

Les étapes de décalage, de calcul et d'extraction sont ensuite réitérées pour plusieurs incréments.

Selon l'exemple de la figure 2, M valeurs d'une enveloppe Z sont ainsi obtenues, d'abord Z($\delta\tau$), puis Z(2* $\delta\tau$) et ainsi de suite jusqu'à Z(M* $\delta\tau$).

Lors de l'étape d'estimation, il est estimé au moins une propriété du signal incident. Dans l'exemple décrit, les propriétés sont la fréquence et la direction d'arrivée du signal incident.

Chaque propriété est obtenue par analyse de l'enveloppe.

Pour cela, il est utilisé le fait que l'enveloppe présente une suite de maxima locaux périodiques.

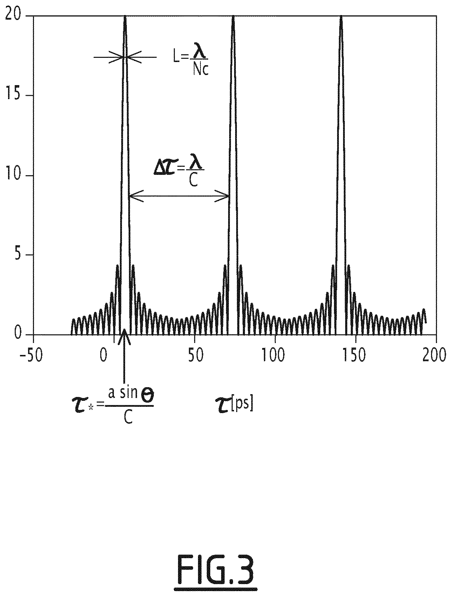

Pour mieux comprendre comment les propriétés visées sont obtenues, il convient de se référer à la figure 3.

La figure 3 est un graphe présentant l'évolution de l'enveloppe Z en fonction de l'incrément noté $\tau$ pour une valeur de $\theta$ = 15°, $\lambda$ = 3 cm et N = 20.

La largeur des maxima locaux est donnée par $L = \frac{2\lambda}{Nc}$ (soit $\frac{\lambda}{Nc}$ à 3dB) et la périodicité des maxima locaux est $\Delta\tau = \frac{\lambda}{c}$.

Une mesure $\hat{\Delta}$ de l'espacement entre les maxima locaux de l'enveloppe Z permet une mesure $\hat{\lambda}$ de la longueur d'onde du signal reçu via $\hat{\lambda} = c\widehat{\Delta\tau}$.

Cela permet ainsi d'obtenir la fréquence du signal incident.

Par ailleurs, la position du premier maximum de l'enveloppe Z peut fournir une mesure de l'angle puisque les maxima locaux sont obtenus aux points $\tau = \frac{a\sin\theta}{c}$ modulo $\Delta\tau$, sous réserve que l'ambiguïté $\Delta\tau$ soit supérieure à l'intervalle de valeurs de $\tau$ attendues pour une plage d'angles [$\theta_{min}$, $\theta_{max}$].

Cette condition correspond au fait que l'espacement a du réseau d'antennes vérifie a < $\lambda_{min}$/2 pour $\theta$ variant de -$\pi$/2 à +$\pi$/2.

Dans ces conditions, la position estimée $\hat{\tau}_*$ du premier maximum de l'enveloppe Zdonne une estimation de l'angle d'arrivée du signal incident via $\sin\hat{\theta} = \frac{c\hat{\tau}_*}{a}$.

En résumé, la détermination de la position du maximum absolu de l'enveloppe Z permet d'estimer l'angle d'arrivée du signal incident tandis que la détermination de la période entre deux maxima locaux successifs de l'enveloppe Z permet d'estimer la fréquence du signal incident.

Dans l'exemple proposé, la valeur de l'incrément $\delta\tau$ est choisie de façon à échantillonner convenablement l'enveloppe Z, ce qui revient à obtenir au moins une valeur de l'enveloppe Z pour avoir au moins un échantillon par ouverture à 3 dB des lobes de l'enveloppe.

Similairement, le nombre M est choisi pour avoir au moins une période de l'enveloppe à l'angle d'arrivée maximal, c'est à dire tel que $M\delta_\tau \geq \frac{2\lambda_{max}-a}{c}$.

Avec de telles valeurs, le procédé permet d'estimer la fréquence et l'angle d'arrivée du signal incident.

Le procédé effectue un parallèle original avec la diffraction optique, conduisant à un dispositif d'analyse spécifique de très faible charge calculatoire permettant d'estimer conjointement l'angle d'arrivée et la fréquence d'un signal.

Autrement formulé, le procédé d'analyse permet d'obtenir simultanément la fréquence et de la direction d'arrivée d'un signal large bande avec un récepteur à échantillonnage temporel direct ne respectant pas le critère de Shannon impliquant moins de calculs et présentant une bonne robustesse.

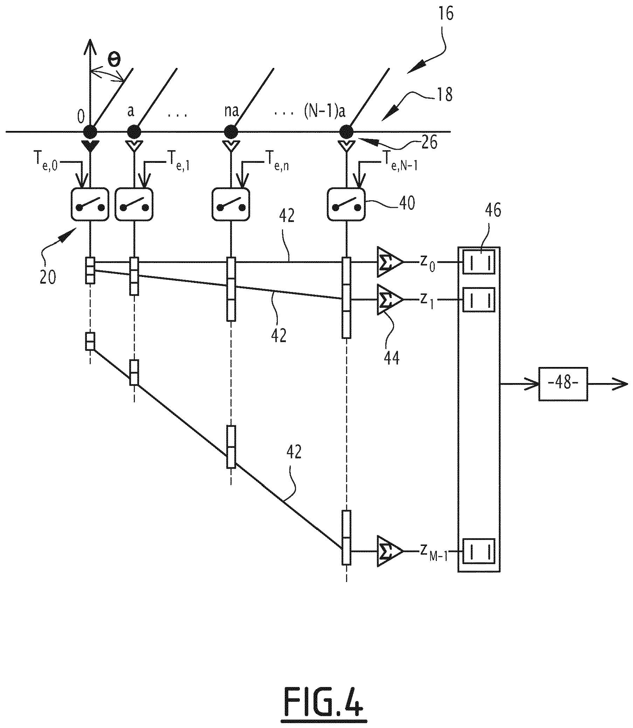

Selon une variante, le procédé est mis en oeuvre de manière numérique à l'aide du dispositif d'analyse représenté sur la figure 4.

Chaque voie de traitement 20 comporte un échantillonneur 40 propre à échantillonner un signal incident à une fréquence d'échantillonnage correspondant à une période d'échantillonnage.

Dans l'exemple proposé, la période d'échantillonnage $T_{e,i}$ de la i-ième voie est décalée de i*$\delta_\tau$ par rapport à la période de la première voie de traitement 20.

Autrement formulé, les périodes d'échantillonnage vérifient :

$$T_{e,n} = T_{e,0} + n\delta_\tau \ , \ n = 0\ldots N-1$$

Dans un tel cas, l'étape de décalage est réalisée par échantillonnage par chaque échantillonneur 40 pour obtenir des échantillons sur chaque voie de traitement 20.

Les échantillons obtenus correspondent à la réalisation d'un échantillonnage temporel sub-Nyquist du signal, toutes les voies de traitement 20 enregistrant un même nombre d'échantillons temporels.

Lors de l'étape de sommation, à la première itération, tous les premiers échantillons de chaque voie de traitement 20 sont sommés dans une première voie de sortie 42 à l'aide d'un sommateur 44.

Puis, à la deuxième itération, les deuxièmes échantillons de chaque voie de traitement 20 sont sommés dans une deuxième voie de sortie 42 à l'aide d'un autre sommateur 44.

Et ainsi de suite jusqu'aux M-ièmes échantillons sommés sur une M-ième voie de sortie 42.

L'étape d'extraction est menée par application d'une valeur absolue (voir rectangle 46) suivie d'un filtrage numérique 48.

Il est ainsi obtenu sur la première voie de sortie 42 un premier échantillon $z_0$, sur la deuxième voie de sortie 42 un deuxième échantillon $z_1$, et ainsi de suite jusqu'à la M-ième voie de sortie 42 sur laquelle est obtenue un M-ième échantillon $z_{M-1}$.

Le calcul montre que chaque échantillon s'écrit :

$$z_m = \frac{\sin\left[N\pi\frac{a}{\lambda}(mQ - \sin\theta)\right]}{\sin\left[\pi\frac{a}{\lambda}(mQ - \sin\theta)\right]}\cos\left[\phi_1 + 2\pi\frac{a}{\lambda}m\left(Q_0 + \frac{(N-1)}{2}Q\right)\right] , \qquad m = 0\dots M - 1 ,$$

Où

$$Q = \frac{c\delta_\tau}{a} \quad \text{et} \quad Q_0 = \frac{cT_{e,0}}{a}.$$

Il peut être observé que la forme des échantillons est identique au cas analogique, Aussi, comme précédemment, l'analyse de l'enveloppe permet d'obtenir des estimations de la fréquence et de la direction d'arrivée du signal.

Dans le cas de la figure 4, les échantillons de signal produits sont alors traités de manière particulièrement économique en charge de calcul, dans le sens où tous les premiers échantillons de N voies sont sommés pour former une première voie de sortie, tous les deuxièmes échantillons des N voies sont sommés pour former une deuxième voie de sortie, etc. jusqu'à former une M-ième voie de sortie.

Il est à noter qu'une telle économie de calcul peut être favorisée par un choix de la fréquence d'échantillonnage maximale ($1/T_{e,0}$ dans la première voie) la plus grande possible et une valeur de Q la plus faible possible.

D'autres configurations du dispositif d'analyse 16 sont également envisageables.

En particulier, au lieu de l'échantillonnage en parallèle proposé en référence à la figure 4, l'échantillonnage peut être réalisé en série. Un échantillonnage en série consiste à prélever successivement des échantillons de signal retardés par rapport à un instant de référence dans une fenêtre d'analyse.

## Revendications

**1.** Procédé d'analyse des propriétés d'un signal incident par un dispositif d'analyse (16) comportant un réseau antennaire (18) comportant N antennes (26) linéairement espacées, chaque antenne (26) étant repérée par un indice n, l'indice n étant un entier compris entre 0 et N-1, le procédé comportant une étape de :

- réception du signal incident par les N antennes,

le procédé étant **caractérisé en ce que** le procédé comporte également une étape de :

- décalage temporel de chaque signal reçu d'une valeur de n fois le même incrément, pour obtenir des échantillons temporellement décalés,
- calcul d'une sommation desdits échantillons temporellement décalés, pour obtenir un signal de sommation relatif à l'incrément considéré, le signal de sommation étant le produit de la valeur d'une enveloppe relative à une valeur de l'incrément considéré et d'une modulation, et
- extraction de la valeur de l'enveloppe relative à la valeur de l'incrément, les étapes de décalage, de calcul et d'extraction étant réitérées pour différentes valeurs d'incréments, et
- estimation d'une propriété du signal incident en utilisant les différentes valeurs de l'enveloppe extraites.

**2.** Procédé selon la revendication 1, dans lequel l'incrément est identique à chaque itération.

**3.** Procédé selon la revendication 1 ou 2, dans lequel l'étape d'extraction comporte un redressement suivi d'un filtrage passe-bas pour obtenir la valeur absolue de l'enveloppe pour l'incrément.

**4.** Procédé selon l'une quelconque des revendications 1 à 3, dans lequel l'enveloppe présente une succession de maxima locaux et dans lequel, lors de l'étape d'estimation, il est déterminé la position du premier maximum local de l'enveloppe, la position du premier maximum local étant utilisée pour estimer la direction d'arrivée du signal incident.

5. Procédé selon l'une quelconque des revendications 1 à 4, dans lequel, l'enveloppe présente une période, la période étant l'intervalle entre deux maxima absolus successifs et dans lequel, lors de l'étape d'estimation, il est déterminé la période de l'enveloppe, la période étant utilisée pour estimer la fréquence du signal incident.

6. Dispositif d'analyse (16) des propriétés d'un signal incident, le dispositif d'analyse (16) comportant un réseau antennaire (18) comportant N antennes (26) linéairement espacées, chaque antenne (26) étant repérée par un indice n, l'indice n étant un entier compris entre 0 et N-1, le dispositif d'analyse (16) étant propre à :

   - recevoir un signal incident par les N antennes,

   le dispositif d'analyse (16) étant **caractérisé en ce que** le dispositif d'analyse (16) est propre à :

   - pour différentes valeurs d'incréments :

      - décaler temporellement chaque signal reçu d'une valeur de n fois le même incrément, pour obtenir des échantillons temporellement décalés,
      - calculer une sommation desdits échantillons temporellement décalés, pour obtenir un signal de sommation relatif à l'incrément considéré, le signal de sommation étant le produit de la valeur d'une enveloppe relative à une valeur de l'incrément considéré et d'une modulation, et
      - extraire la valeur de l'enveloppe relative à la valeur de l'incrément,

   - estimer une propriété du signal incident en utilisant les différentes valeurs de l'enveloppe extraites.

7. Dispositif d'analyse selon la revendication 6, dans lequel le dispositif d'analyse (16) est un dispositif numérique.

8. Dispositif d'analyse selon la revendication 6, dans lequel le dispositif d'analyse (16) est un dispositif analogique.

9. Plate-forme (10) comportant un dispositif d'analyse d'un signal (16) selon l'une quelconque des revendications 6 à 8.

**Patentansprüche**

1. Analyseverfahren der Eigenschaften eines einfallenden Signals durch eine Analysevorrichtung (16), umfassend ein Antennenarray (18), umfassend N linear beabstandete Antennen (26), wobei jede Antenne (26) durch einen Index n gekennzeichnet ist, wobei der Index n eine ganze Zahl zwischen 0 und N-1 ist, das Verfahren umfassend einen folgenden Schritt:

   - Empfangen des einfallenden Signals durch die N Antennen, wobei das Verfahren **dadurch gekennzeichnet ist, dass** das Verfahren auch einen folgenden Schritt umfasst:
   - zeitliches Verschieben von jedem empfangenen Signal um einen Wert des n-fachen des gleichen Inkrementes, um zeitverschobene Abtastwerte zu erlangen,
   - Berechnen einer Summation der zeitlich verschobenen Abtastwerte, um ein Summensignal in Bezug auf das betrachtete Inkrement zu erlangen, wobei das Summensignal das Produkt aus dem Wert einer Hüllkurve bezüglich eines Werts des betrachteten Inkrements und einer Modulation ist, und
   - Extrahieren des Hüllkurvenwerts, der sich auf den Wert des Inkrements bezieht, wobei die Schritte eines Verschiebens, Berechnens und Extrahierens für verschiedene Werte von Inkrementen wiederholt werden, und
   - Schätzen einer Eigenschaft des einfallenden Signals unter Verwendung der verschiedenen extrahierten Hüllkurvenwerte.

2. Verfahren nach Anspruch 1, wobei das Inkrement bei jeder Iteration gleich ist.

3. Verfahren nach Anspruch 1 oder 2, wobei der Extraktionsschritt eine Gleichrichtung gefolgt von einer Tiefpassfilterung umfasst, um den Absolutwert der Hüllkurve für das Inkrement zu erlangen.

4. Verfahren nach einem der Ansprüche 1 bis 3, wobei die Hüllkurve eine Folge von lokalen Maxima aufweist, und wobei in dem Schätzschritt die Position des ersten lokalen Maximums der Hüllkurve bestimmt wird, wobei die Position des ersten lokalen Maximums zum Schätzen der Ankunftsrichtung des einfallenden Signals verwendet wird.

5. Verfahren nach einem der Ansprüche 1 bis 4, wobei die Hüllkurve eine Periode aufweist, wobei die Periode das Intervall zwischen zwei aufeinanderfolgenden absoluten Maxima ist, und wobei in dem Schrittschätzschritt die Periode der Hüllkurve bestimmt wird, wobei die Periode zum Schätzen der Frequenz des einfallenden Signals verwendet wird.

6. Analysevorrichtung (16) der Eigenschaften eines einfallenden Signals, die Analysevorrichtung (16) umfassend ein Antennenarray (18), umfassend N linear beabstandete Antennen (26), wobei jede Antenne (26) durch einen Index n gekennzeichnet ist, wobei der Index n eine ganze Zahl zwischen 0 und N-1 ist, wobei die Analysevorrichtung (16) zu Folgendem geeignet ist:

- Empfangen eines von den N Antennen einfallendes Signals, wobei die Analysevorrichtung (16) **dadurch gekennzeichnet ist, dass** die Analysevorrichtung (16) zu Folgendem geeignet ist:
- für verschiedene Inkrementwerte:

- zeitliches Verschieben von jedem empfangenen Signal um einen Wert des n-fachen des gleichen Inkrementes, um zeitverschobene Abtastwerte zu erlangen,
- Berechnen einer Summation der zeitlich verschobenen Abtastwerte, um ein Summensignal in Bezug auf das betrachtete Inkrement zu erlangen, wobei das Summensignal das Produkt aus dem Wert einer Hüllkurve bezüglich eines Werts des betrachteten Inkrements und einer Modulation ist, und
- Extrahieren des Werts der Hüllkurve in Bezug auf den Inkrementwert,

- Schätzen einer Eigenschaft des einfallenden Signals unter Verwendung der verschiedenen extrahierten Hüllkurvenwerte.

7. Analysevorrichtung nach Anspruch 6, wobei die Analysevorrichtung (16) eine digitale Vorrichtung ist.

8. Analysevorrichtung nach Anspruch 6, wobei die Analysevorrichtung (16) eine analoge Vorrichtung ist.

9. Plattform (10), umfassend eine Analysevorrichtung eines Signals (16) nach einem der Ansprüche 6 bis 8.


**Claims**

1. A method for analyzing the properties of an incident signal by an analysis device (16) comprising an antenna network (18) comprising N linearly spaced antennas (26), each antenna (26) being marked by an index n, the index n being an integer between 0 and N-1, the method comprising a step of:

- receiving the incident signal from the N antennas,

the method being **characterized in that** the method further comprises a step of:

- temporally shifting each received signal by a value of n times the same increment, in order to obtain temporally shifted samples,
- calculating a summation of said temporally shifted samples, in order to obtain a summation signal relative to the considered increment, the summation signal being the product of the value of an envelope relative to one value of said increment and of a modulation, and
- extracting the value of the envelope relative to the value of the increment, the steps of shifting, computing and extracting being repeated for several different valued of increments, and
- estimating a property of the incident signal using the different extracted envelope values.

2. The method according to claim 1, wherein the increment is the same at each iteration.

3. The method according to claim 1 or 2, wherein the extraction step comprises rectification followed by low-pass filtering to obtain the absolute value of the envelope for the increment.

4. The method according to any one of claims 1 to 3, wherein the envelope has a succession of local maxima and wherein the position of the first local maximum of the envelope is determined in the estimation step, the position of the first local maximum being used to estimate the direction of arrival of the incident signal.

5. A method according to any one of claims 1 to 4, wherein the envelope has a period, the period being the interval between two successive absolute maxima and wherein the period of the envelope is determined in the estimation step, the period being used to estimate the frequency of the incident signal.

6. An analysis device (16) for analyzing the properties of an incident signal, the analysis device (16) comprising an antenna network (18) comprising N linearly spaced antennas (26), each antenna (26) being marked by an index n, the index n being an integer between 0 and N-1, the analysis device (16) being suitable for:

- receiving an incident signal from the N antennas,

the analysis device (16) being **characterized in that** the analysis device (16) is further suitable for:

- for several different values of increments:

- temporally shifting each received signal by a value of n times the same increment, in order to obtain temporally shifted samples
- calculating a summation of said temporally shifted samples, in order to obtain a summation signal relative to the considered increment, the summation signal being the product of the value of an envelope relative to one value of said increment and of a modulation, and

- extracting the value of the envelope relative to the value of the increment,
- estimating a property of the incident signal using the different extracted envelope values.

7. The analysis device according to claim 6, wherein the analysis device (16) is a digital device.

8. The analysis device according to claim 6, wherein the analysis device (16) is an analog device.

9. A platform (10) comprising a signal analysis device (16) according to any one of claims 6 to 8.

## FIG.1

$\underline{FIG.2}$

FIG.3

## FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **L.-J. GE et al.** Simultaneous Frequency and Direction Estimation from Parallel Array Data. *IEE Proc. Radar, Sonar Navig.,* 1995, vol. 142 (1), 6-10

- **XU LE et al.** Joint Two-Dimensional DOA and Frequency Estimation for L-Shaped Array via Compressed Sensing PARAFAC Method. *IEEE ACCESS,* 25 Juin 2018, vol. 6, 37204-37213